# EUROPEAN PATENT SPECIFICATION

(11) **EP 3 335 538 B1**
(45) Date of publication and mention of the grant of the patent: **04.11.2020**
(21) Application number: 17207720.8
(22) Date of filing: 15.12.2017
(51) Int. Cl.: A01D 34/73, A01D 34/82, A01D 34/81

(54) **LAWNMOWER WITH A SAFE CUTTING DECK**
RASENMÄHER MIT SICHERHEITSSCHNEIDWERK
TONDEUSE A GAZON AVEC PLATEAU DE COUPE DE SÉCURITÉ

(30) Priority: 19.12.2016 IT 201600128248
(43) Date of publication of application: 20.06.2018
(73) Proprietor: Stiga S.p.A. in breve anche St. S.p.A., 31033 Castelfranco Veneto (TV) (IT)
(72) Inventor: CECCHETTO, Mauro, 35018 San Martino di Lupari (PD) (IT); VILLANOVA, Marco, 31020 Sernaglia della Battaglia (TV) (IT)
(74) Representative: Mittler, Andrea

(56) References cited:
- EP-A1- 3 047 719
- WO-A1-88/05255
- WO-A1-93/18638
- WO-A1-99/30551
- AU-B2- 424 871
- US-A- 4 262 476

## Description

The present invention relates to a lawnmower with a safe cutting deck.

Safe apparatuses for lawnmower cutting decks are known from the prior art, such as FR2568093 and US3971199, in which a protection grid is mounted under the cutting deck to protect the cutting blade. The protection grid comprises a circle-shaped support element which mounts a grid consisting of mutually parallel elements. Disadvantageously, a very large cut grass residue remains inside the cutting deck, so as to prevent an effective cutting of the grass. Disadvantageously, the cutting deck must be cleaned very frequently, by frequently removing the protection grid.

US4369618, US4329834 and US4171608 disclose flat solid disc-shaped, safe cutting blades which lie on a cutting plane. Said flat solid disc comprises housings for mounting protected cutting surfaces. Disadvantageously, the cutting efficiency of said flat solid discs is very low.

US4205510A discloses a rotating box which comprises a first multiplicity of cutting blades arranged radially from a central rotation pin and a second multiplicity of cutting blades arranged on vertical walls of the rotating box. The rotating box provides for the first multiplicity of blades to be arranged with a higher edge than the other edge which lies on the geometric cutting plane. The second multiplicity of cutting blades is arranged towards the inside of the rotating box. The rotating box is closed on the top by a co-rotating baffle lid. The rotating box is protected by a fixed box which is fixed to the cutting deck. The fixed box comprises S-shaped slots, arranged radially from the center towards the outside and comprises openings on side walls of the fixed box. Disadvantageously, the safe apparatus is complicated to manufacture. Disadvantageously, the cut grass residue remains inside the fixed box, thus preventing the rotating box from moving and preventing a satisfactory cutting of the grass by the lawnmower. The cleaning of the rotating box and of the fixed box is disadvantageously difficult due to the complexity of the safe apparatus, and also includes a complicated disassembly of the parts. Disadvantageously, the lawnmower consumes more energy, as it needs to rotate a rotating box which mounts cutting blades therein.

WO-93/18638 discloses a cutting blade of a lawnmower able to be keyed on a vertical drive shaft of the lawnmower according to the preamble of claim 1.

WO-99/30551 discloses a protection grid of a lawnmower which cooperates with a cutting blade of the lawnmower.

It is the object of the present invention to provide a cutting blade which eliminates frictions while increasing the cutting efficiency, limiting the presence of cut grass inside the cutting deck, reducing the energy consumption to rotate the cutting blade, decreasing the accumulation of cut grass in the cutting deck, and increasing the safety and robustness of the cutting blade.

According to the invention, such an object is achieved by a cutting blade of a lawnmower as defined in claim 1.

It is a further object of the present invention to provide a lawnmower with a safe cutting deck which increases safety for the lawnmower user, which increases the cutting efficiency while reducing energy consumption, which has a much smaller accumulation of cut grass in the cutting deck, making the cleaning operations simpler and safer, and which is more robust.

According to the invention, such a further object is achieved by a lawnmower as defined in claim 9.

These and other features of the present invention will become more apparent from the following detailed description of a practical embodiment thereof, shown by way of non-limitative example in the accompanying drawings, in which:
Figure 1 shows a perspective view of a cutting blade according to the present invention;
Figure 2 shows a plan view of the cutting blade;
Figure 3 shows a section view of the cutting blade along line III-III of Figure 2;
Figure 4 shows an enlarged portion of a detail A of Figure 3;
Figure 5 shows a perspective view of an alternative cutting blade;
Figure 6 shows a plan view of the alternative cutting blade;
Figure 7 shows a section view of the cutting blade along line VII-VII of Figure 6;
Figure 8 shows an enlarged portion of a detail B of Figure 7;
Figure 9 shows a top perspective view of a reinforcing disc which is not part of the present invention, and can be integrally mounted with the cutting deck;
Figure 10 shows a bottom perspective view of the reinforcing disc of Figure 9;
Figure 11 shows a plan view of the reinforcing disc;
Figure 12 shows a section view of the reinforcing disc along line XII-XII of Figure 11;
Figure 13 shows a bottom perspective view of a protection grid which is not part of the present invention, and cooperates with the cutting blade;
Figure 14 shows a top perspective view of the protection grid of Figure 13;
Figure 15 shows a plan view of the protection grid;
Figure 16 shows a section view of the protection grid along line XVI-XVI of figure 15;
Figure 17 shows a section view of the protection grid along line XVII-XVII of figure 15;
Figure 18 shows a bottom perspective view of an alternative protection grid which is not part of the present invention, and cooperates with the cutting blade;
Figure 19 shows a top perspective view of the alternative protection grid of Figure 18;
Figure 20 shows a plan view of the alternative protection grid;
Figure 21 shows a section view of the protection grid along line XXI-XXI of figure 20;
Figure 22 shows a section view of the protection grid along line XXII-XXII of figure 20.

With reference to the figures listed above, it can be noted a lawnmower comprising a cutting deck and a safety apparatus mounted with the cutting deck, said safety apparatus comprises a cutting blade 1 and a protection grid 7.

The cutting blade 1 and the protection grid 7 cooperate with each other to achieve a synergistic technical effect of greater safety of the lawnmower, greater cutting efficiency, much smaller accumulation of cut grass in the cutting deck, simplifying the operation of dumping said cut grass outside the cutting deck without needing to remove the protection grid 7 each time.

The cutting blade 1 of the lawnmower is keyed to a vertical motor axis M of the lawnmower, where said vertical motor axis M identifies a rotation direction R of said cutting blade 1 with respect to a cutting deck of the lawnmower.

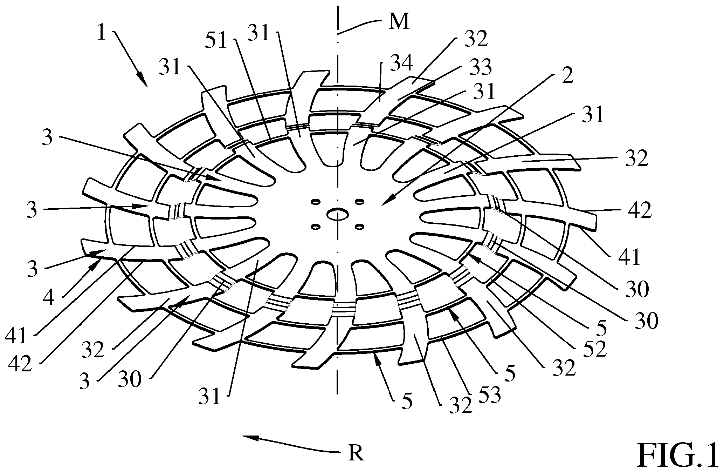

As shown in figures 1-2, 5-6, said cutting blade 1 comprises a flat solid disc-shaped central portion 2, which lies on a first horizontal geometric plane H. Said first horizontal geometric plane H is perpendicular to said vertical motor axis M. Said cutting blade 1 comprises a multiplicity of radial blades 3 which extend horizontally in radial directions with respect to said central portion 2. Each radial blade 3 of said multiplicity of radial blades 3 comprises a first portion 31, which is flat and lies on said first horizontal geometric plane H, and a second end portion 32 comprising at least one cutting portion 4.

Said second end portion 32 of the radial blade 3 is flat and lies on a lower horizontal geometric cutting plane C, where said horizontal geometric cutting plane C is parallel to said first horizontal geometric plane H. Said horizontal geometric cutting plane C is arranged at a vertical distance D with respect to said first horizontal geometric plane H. Said vertical distance D is measured along a vertical axis parallel to the vertical motor axis M. In a grass cutting position, said horizontal geometric cutting plane C is at a smaller distance from the ground with respect to the first horizontal geometric plane H.

Advantageously, the central portion 2 of the cutting blade 1 does not come into contact with the grass to be cut because it is raised with respect to the horizontal geometric cutting plane C and only the end portion 32 of the radial blades 3 provided with at least one cutting portion 4 comes into contact with the grass, being placed on the horizontal geometric cutting plane C. The frictions of the disc of the central part 2 are eliminated and the cutting efficiency of the cutting blade 1 is increased, while reducing the energy consumption needed to rotate the cutting blade 1. A more efficient cutting of the grass allows to also cut the grass residue which remains in the cutting deck once it is cut, thus allowing to advantageously reduce the accumulation of grass in the cutting deck.

The vertical distance D depends on the size of the diameter of the cutting blade. The vertical distance D is preferably between 0,5 and 5 centimeters.

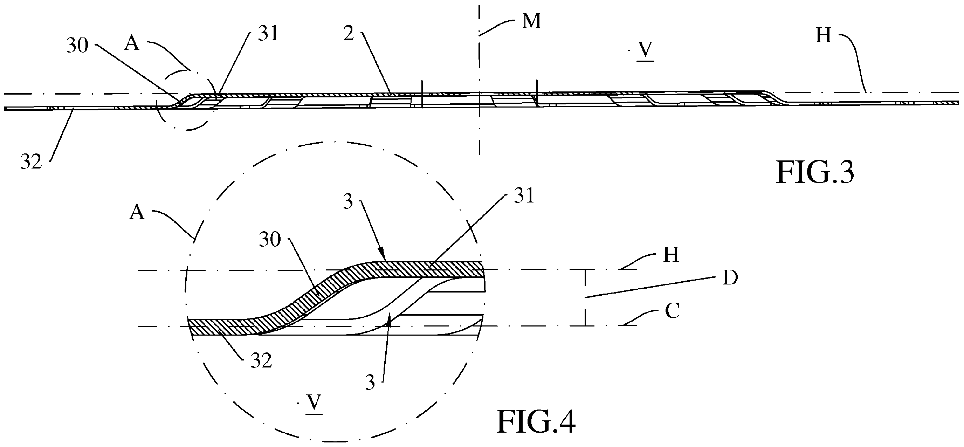

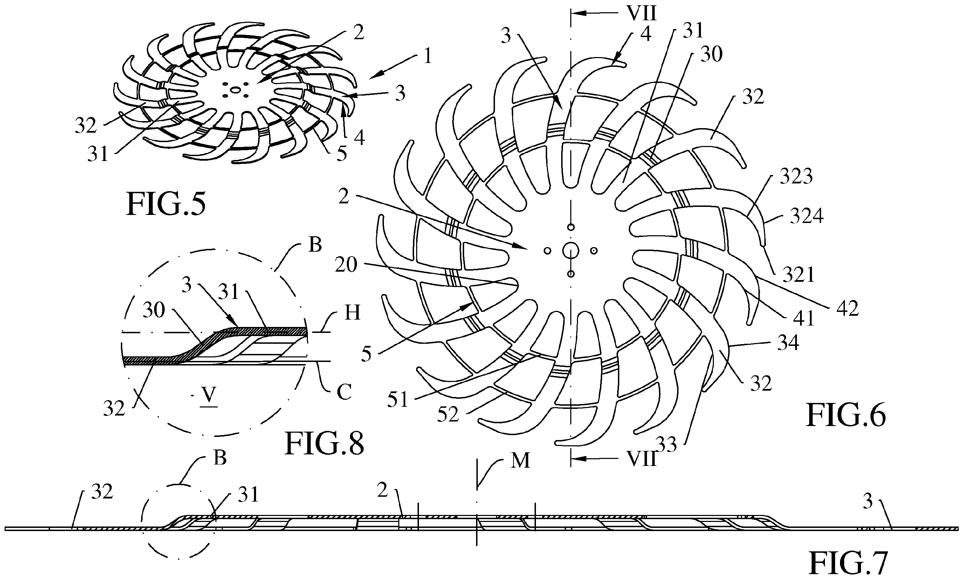

As shown in figures 4 and 8, each radial blade 3 comprises a central portion 30, which connects the first portion 31 to the second end portion 32. Said central portion 30 of the radial blade 3 has a flex-shaped geometric section. Said geometric section lies on a vertical geometric plane V identified by a geometric radius of the central portion 2 of the cutting blade 1 and by a vertical axis parallel to the vertical motor axis M.

Advantageously, the flex-shape of the central portion 30 allows to increase the aerodynamic properties of the geometric shape of the cutting blade 1, thus further reducing the energy needed to rotate it. The flex-shape of the central portion 30 also allows to increase the robustness of the cutting blade 1 because it better deflects possible residues or stones while cutting the grass.

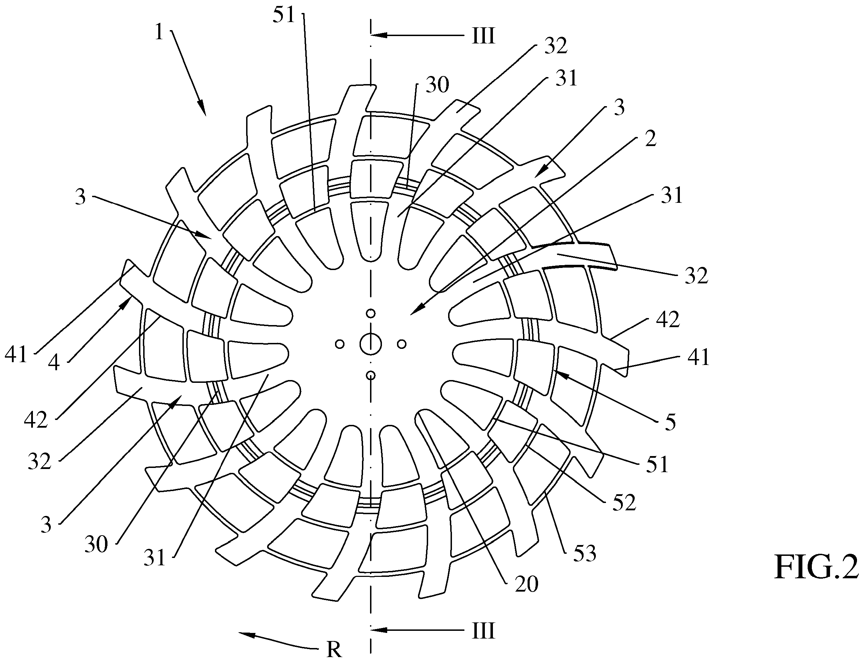

As particularly shown in figures 2 and 6, the cutting blade 1 comprises at least one reinforcing ring 5. Said reinforcing ring 5 is concentric with said central portion 2 of said cutting blade 1, said reinforcing ring 5 is mounted with each radial blade 3 of said multiplicity of radial blades 3.

Advantageously, the presence of one or more reinforcing rings keeps the geometric shape of the cutting blade 1 when the radial blades 3 are long, thus increasing the resistance to collisions with stones or other material while cutting the grass. The reinforcing ring 5 advantageously improves keeping the separation distance between a radial blade 3 and the next one, thus avoiding bending and breakages of the radial blades 3.

As shown in Figures 2-6, at least a first reinforcing ring 51 of said at least one reinforcing ring 5 is mounted with each first portion 31 of said radial blade 3 of said multiplicity of radial blades 3 and at least a second reinforcing ring 52, 53 of said at least one reinforcing ring 5 is mounted with each second end portion 32 of said radial blade 3 of said multiplicity of radial blades 3. As the radial blades 3 are long, two second reinforcing rings 52 and 53 are mounted, the first of the two second reinforcing rings 52 is mounted on a portion of the second portion 32 closest to the first portion 31, while the second of said two second reinforcing rings 52 is mounted at an outermost portion of the second portion 32.

A cutting blade 1 comprising three reinforcing rings 5 is shown in figure 2 as an example. The first reinforcing ring 51 is mounted with each first portion 31 of said radial blade 3, while other two second concentric reinforcing rings 52 and 53 are mounted with each second end portion 32 of said radial blade 3.

An alternative cutting blade 1 comprising two reinforcing rings 5 is shown in figure 6 as an example. The first reinforcing ring 51 is mounted with each first portion 31 of said radial blade 3, while the second reinforcing ring 52 is mounted with each second end portion 32 of said radial blade 3.

Alternative cutting blades 1 may be provided, where the number of reinforcing rings 51-53 depends on the length of the radial blade 3. Advantageously, the smaller the diameter of the disc of the central portion 2, the lower the frictions with the grass and lesser the energy loss for rotating the cutting blades 1. The smaller the diameter of the central portion 2, the longer the radial blades 3, thus increasing the cutting efficiency even further. Longer radial blades 3 must have a greater number of reinforcing rings 51-53 to keep the geometric shape of the cutting blade 1 in a more effective manner and increase the robustness and safety thereof

Advantageously, a greater length of the radial blades 3 and a greater number of reinforcing rings 5 allow to obtain a lighter cutting blade, and thus less energy for rotating the cutting blade 1, with larger empty portions between the radial blades 3 and the reinforcing rings 5 from where the residual cut grass can fall onto the ground, thus clearing the cutting deck more effectively, and reducing the presence of residual cut grass in the cutting deck and simplifying the cleaning action of the cutting deck.

Figures 2 and 6 show two cutting portions 4, i.e. a front cutting portion 41 of said at least one cutting portion 4 of the second end portion 32 of said radial blade 3 which is arranged on the front of the end portion 32 in rotation direction R and a rear cutting portion 42 of said at least one cutting portion 4 of the second end portion 32 of said radial blade 3 which is arranged on the rear of the end portion 32 in opposite direction to the rotation direction R.

Advantageously, the two cutting portions 4 allow to obtain a greater cutting efficiency, ensuring an even better cutting of the cut grass which remains inside the cutting deck, thus reducing the presence of residual cut grass inside the cutting deck even further.

As particularly shown in figures 2 and 6, each radial blade 3 comprises a front portion 33 facing the rotation direction R and a rear portion 34 oppositely facing the rotation direction R. Each radial blade 3 is curvilinear in shape so that, in a top plan view, said front portion 33 is concave in shape and said rear portion 34 is convex in shape.

The curvilinear shape of the radial blade 3 exposes a larger surface of said at least one cutting portion 4 to the grass cutting, thus advantageously increasing the cutting efficiency.

Advantageously, the shape of the radial blades 3 increases the air flow in the cutting deck, thus increasing the cutting of the residual cut grass even further, increasing the cutting efficiency and reducing the presence of residual cut grass inside the cutting deck.

As shown in the figure 6, an alternative cutting blade 1 may be provided, where the second end portion 32 of said radial blade 3 is sickle-shaped in a top plan view. Said second end portion 32 comprises a front portion 323 facing the rotation direction R and a rear portion 324 oppositely facing the rotation direction R. When seen in a top plan view, said front portion 323 of said second end portion 32 is concave in shape and said rear portion 324 of said second end portion 32 is convex in shape. Advantageously, the sickle shape of the end portion 32 of said radial blade 3 allows to expose an even larger surface of said at least one cutting portion 4 to the grass cutting, thus increasing the cutting efficiency even further and reducing the residual cut grass in the cutting deck. Advantageously, the sickle shape of the end portion 32 of said radial blade 3 and in general the curvilinear shape of the radial blade 3 allow to achieve better aerodynamic properties of the cutting blade 1, thus increasing the cutting efficiency, reducing the energy to rotate the cutting blade 1 with a greater cutting efficiency, thus reducing the presence of residual cut grass in the cutting deck.

Said second end portion 32 has a tip 321 facing the rotation direction R to increase the aerodynamic properties of the cutting blade 1 even further and synergistically contribute to a greater cutting efficiency, by exposing a larger surface of the two cutting portions 4 to the grass cutting, thus reducing the energy to rotate the cutting blade 1 and reducing the presence of residual cut grass in the cutting deck.

As shown in figures 2 and 6, said central portion 2 comprises a multiplicity of portions with concave profile 20 intercalated with said multiplicity of radial blades 3, so that each concave profile 20 of said central portion 2 is arranged between a radial blade 3 and a successive radial blade 3 of said multiplicity of radial blades 3, where said concave profile 20 reduces the diameter of the disc of the central portion 2. The central portion 2 is thus lighter and the surface exposed to friction effects is advantageously reduced even further, thus reducing the energy needed to rotate the cutting blade 1 even further, and increasing the cutting efficiency even further while reducing the presence of residual cut grass in the cutting deck.

The protection grid 7 is interrelated with the cutting blade 1. The protection grid 7 is a different object from the cutting blade 1. Said protection grid 7 and said cutting blade 1 complement each other and work together to obtain a further synergistic effect.

Said protection grid 7 of the lawnmower cooperates with said cutting blade 1 of the lawnmower.

Said protection grid 7 is fixedly mounted with a cutting deck of the lawnmower. Said lawnmower cutting deck comprises walls which hang downwards and form a downward-facing lower opening. Said protection grid 7 comprises a support boundary element 76 which is mounted with said lower opening of the cutting deck of the lawnmower so as to cover the entire action range of said cutting blade 1. Said action range of said cutting blade 1 is identified by a complete rotation of said cutting blade 1

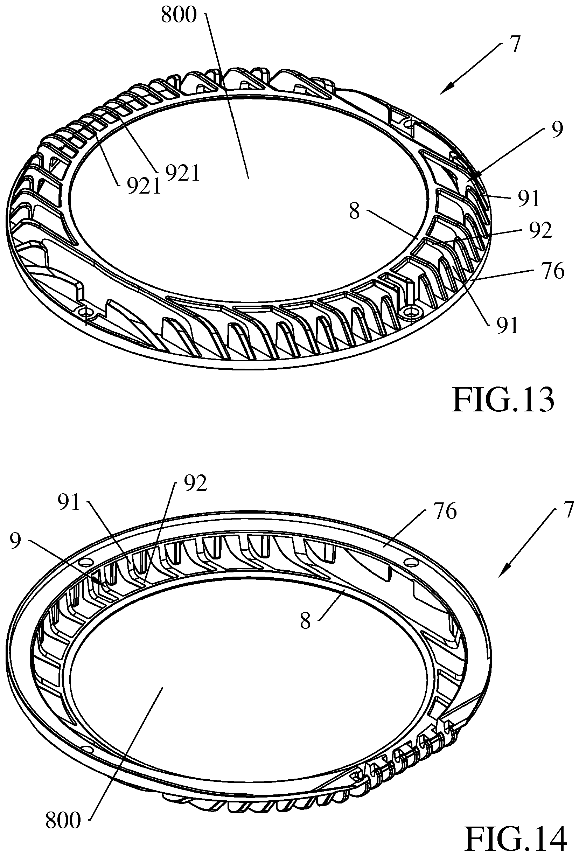

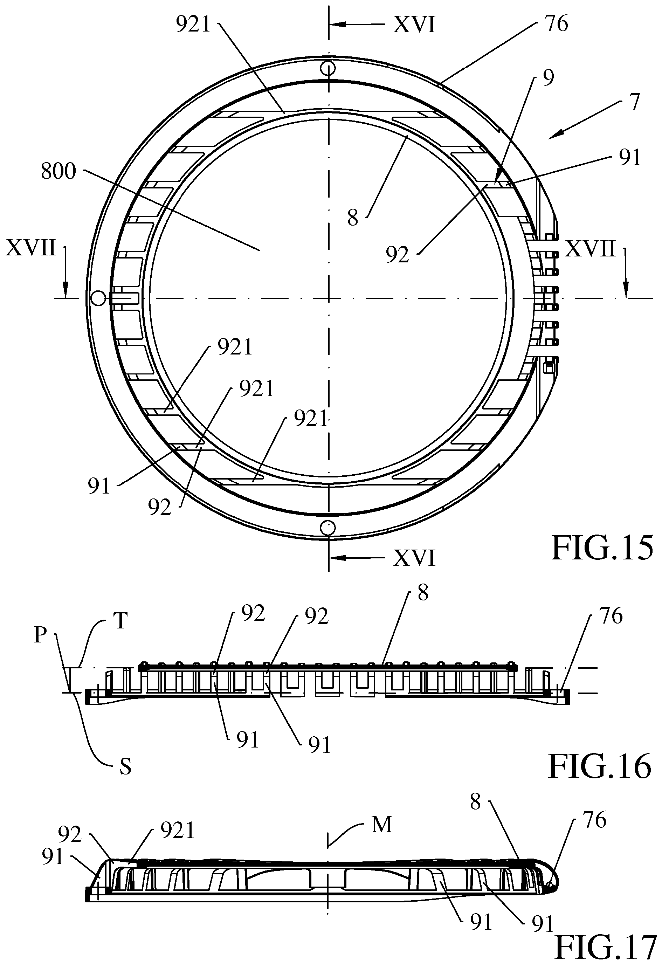

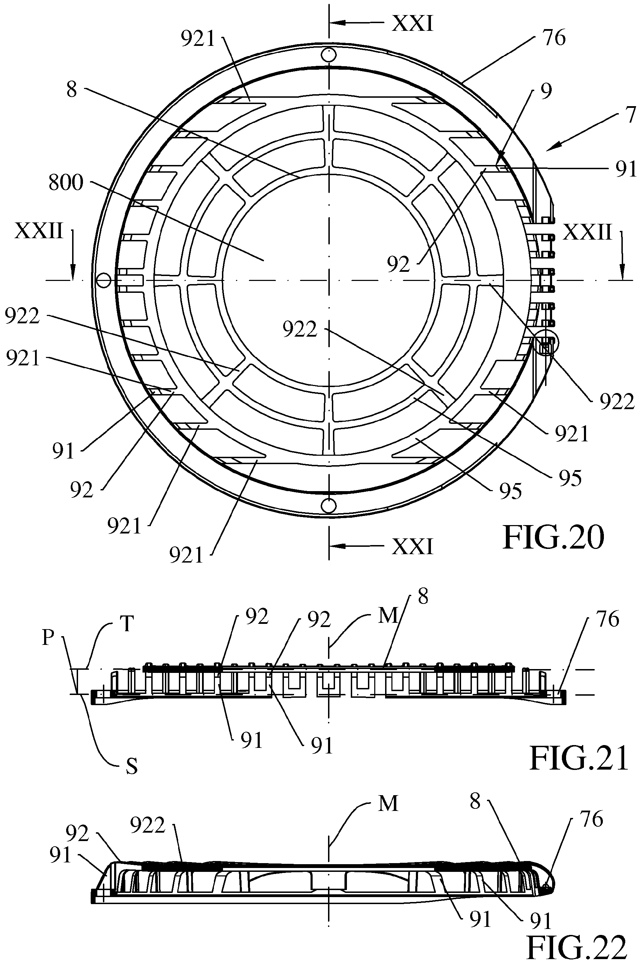

Figures 13-22 show a circular support boundary element 76. However, it is also possible for the support boundary element 76 to have different shapes according to the shape of the lower opening of the cutting deck.

Said support boundary element 76 lies on a second horizontal geometric plane S.

The edge of the lower opening of the cutting deck also lies on the second horizontal geometric plane S. Said second horizontal geometric plane S may be coherent with the horizontal geometric cutting plane C, but they may be at a different height, according to the shape of the walls of the lawnmower cutting deck.

As particularly shown in figures 13-15 and 18-20, said protection grid 7 comprises an inner ring 8 of smaller diameter than a geometric circle identified by the action range of said cutting blade 1. Said inner ring 8 identifies an obstruction-free through opening 800. Said inner ring 8 lies on a third horizontal geometric plane T lower than said second horizontal geometric plane S, said third horizontal geometric plane T is parallel to said second horizontal geometric plane S, said third horizontal geometric plane T is arranged at a second vertical distance P with respect to said second horizontal geometric plane S, said second vertical distance P is measured along a vertical axis which is perpendicular to the ground, in a grass cutting position said third horizontal geometric plane T is at a distance from the ground lower than the second horizontal geometric plane S.

Said protection grid 7 comprises a multiplicity of connecting means 9 between the inner ring 8 and the support boundary element 76.

Said connecting means 9 comprise at least a first portion 91 which extends from said support boundary element 76 of the protection grid 7 and said first portion 91 hangs downwards.

Said connecting means 9 of the protection grid 7 comprise at least a second portion 92, said at least a second portion 92 of said connecting elements 9 supports said inner ring 8.

Advantageously, the inner ring 8 has an obstruction-free opening 800 which allows a more efficient grass cutting, allowing to better dump the residual cut grass which may accumulate in the cutting deck without needing to remove the protection grid 7.

The opening 800 of the inner ring 8 geometrically corresponds to the central portion 2 of the cutting blade 1. Said central portion 2 of the cutting blade 1 is raised by a distance D with respect to the horizontal geometric cutting plane C. The opening 800 is obstruction-free for a diameter which is from 30% to 95% with respect to the diameter of the geometric circle identified by the action range of said cutting blade.

The connecting means 9 of the protection grid 7 which support the inner ring 8 advantageously allow to increase the safety of the cutting deck, preventing the blade from accidentally striking a foot or the tip of a foot.

The shape of the protection grid 7 allows to have a considerable number of open spaces to better let through the residual cut grass towards the ground. Said open spaces between one connection means 9 and the other, the support boundary element 76 and the inner ring 8 allow a greater cutting efficiency of the lawnmower.

As particularly shown in figures 13-15 and 18-20, said at least a first portion 91 of connection means 9 of said protection grid 7 is a multiplicity of sectors 91 which extend from the support boundary element 76 and hang downwards to said third horizontal geometric plane T.

Said at least a second portion 92 of connecting means 9 of said protection grid 7 comprises a multiplicity of grid elements 921 and a multiplicity of radial elements 922.

Said grid elements 921 are mutually parallel to form a grid and lie on said third horizontal geometric plane T.

Said multiplicity of radial elements 922 lie on said third horizontal geometric plane T. Said multiplicity of radial elements 922 is connected on one side to at least some of said multiplicity of grid elements 921 and on the other side to said inner ring 8.

Said multiplicity of grid elements 921 is connected to at least some sectors 91 of said multiplicity of sectors 91.

Advantageously, the particular shape of the sectors and of the elements of the connecting means 9 allows a better support of the inner ring 8, a greater grass cutting efficiency, a better evacuation of the residual cut grass in the cutting deck without removing the protection grid 7 each time, thus increasing safety not only during the grass cutting step but also increasing safety during the step of cleaning the residual cut grass from the cutting deck.

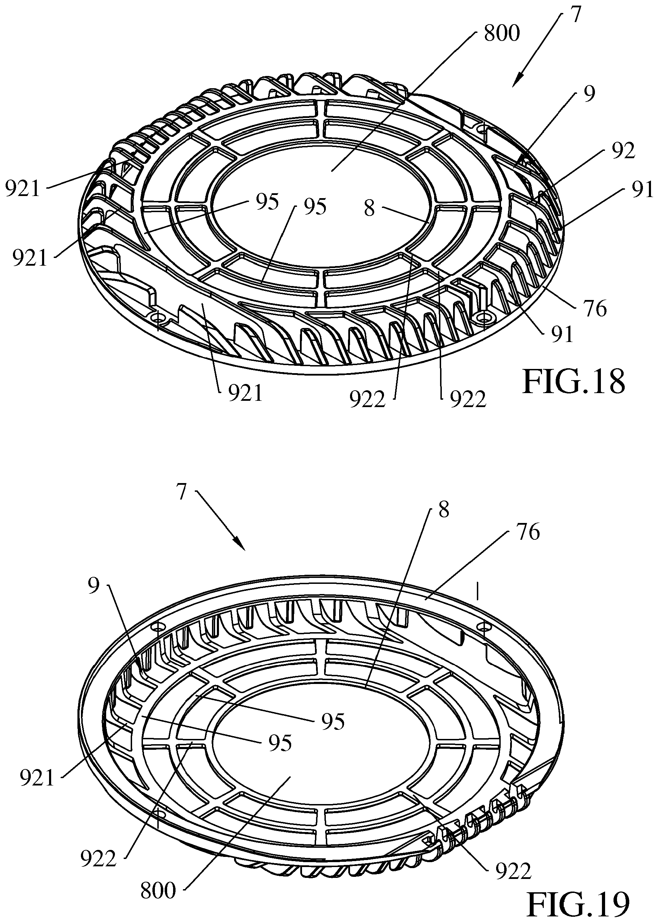

As particularly shown in the figures 18-20, an alternative protection grid 7 comprises at least one inner reinforcing ring 95. Figures 18-20 show two inner reinforcing rings 95. Each inner reinforcing ring 95 is concentric with said inner ring 8. Each inner reinforcing ring 95 is mounted with each radial element 922 of said multiplicity of radial elements 922. In particular, two inner reinforcing rings 95 are shown in figures 18-20. A first outermost reinforcing ring 95 is mounted with grid elements 921 and with radial elements 922. While a second innermost reinforcing ring 95 is mounted with radial elements 922.

Advantageously, the presence of residual cut grass is decreased and the cutting efficiency and safety to the lawnmower are increased during the cutting step and the cleaning step.

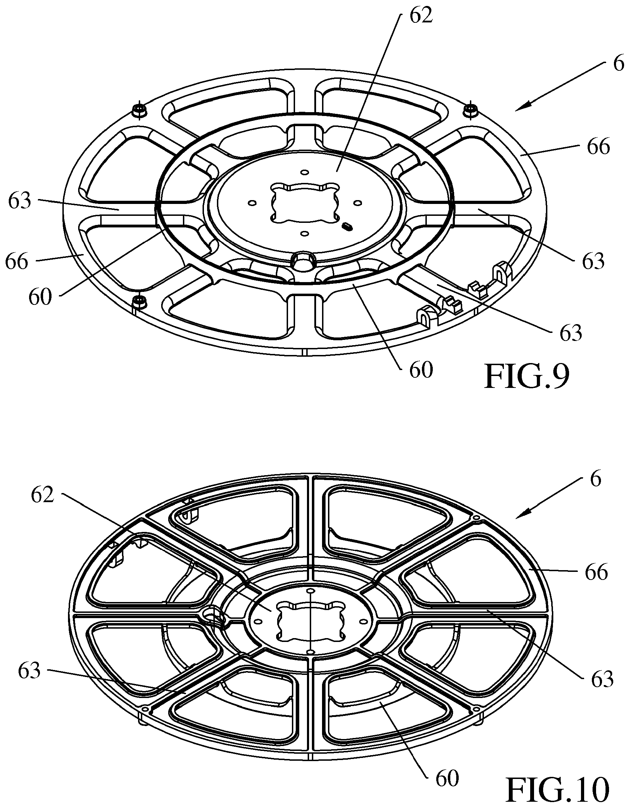

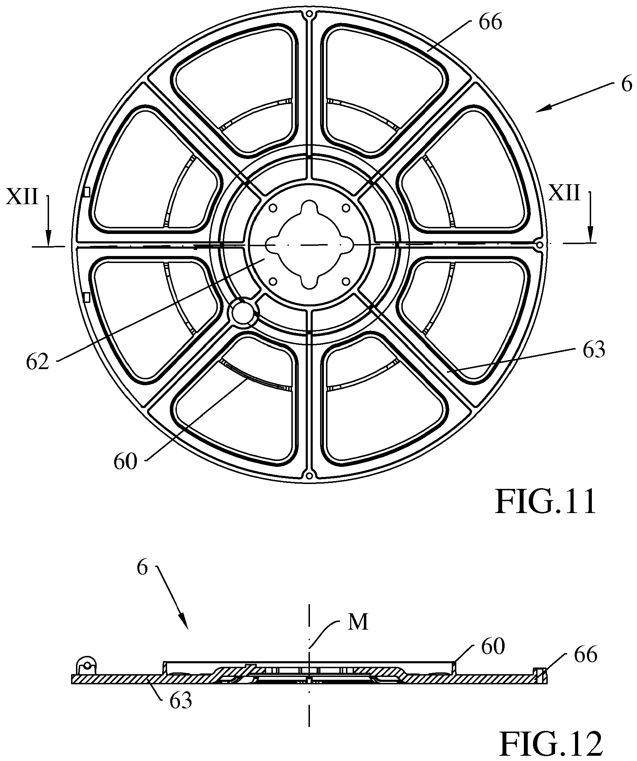

Figures 9-12 show a reinforcing disc 6, which is integrally mounted with the cutting deck and positioned above said cutting blade 1 so that at least the central portion 2 of the cutting blade 1 is arranged underneath at a central portion 62 of said reinforcing disc 6. The reinforcing disc 6 and the protection grid 7 enclose the cutting blade 1. Said reinforcing disc 6 comprises said flat disc-shaped central portion 62. A multiplicity of radial reinforcing sectors 63 of the reinforcing disc 6 extends radially from said central portion 62 of the reinforcing disc 6. Said reinforcing disc 6 comprises an outer reinforcing ring 66 which is mounted at the ends of the radial reinforcing sectors 63. Said reinforcing disc 6 comprises at least one inner reinforcing ring 60. Each said at least one inner reinforcing ring 60 is arranged at said at least one reinforcing ring 5 of said cutting blade 1.

Advantageously, said reinforcing disc 6 allows to make the cutting deck on which the cutting blade 1 and the protection grid 7 are mounted even more solid and robust, thus increasing the safety of the lawnmower and its resistance to deformations, the robustness in case of accidental collisions with stones and other cut grass residues. Said reinforcing disc 6 has a multiplicity of empty spaces between the reinforcing radial sectors 63 and the reinforcing rings 60, 66 which allow to reduce the weight of the lawnmower cutting deck. With regard to the operation of the lawnmower with a safety cutting deck, the protection grid 7 protects the user from the action of the cutting blade 1. The cutting blade 1 according to the present invention cuts the grass even more effectively and efficiently and much less residual cut grass remains in the cutting deck.

With regard to cleaning the safety cutting deck, it is not necessary to remove the protection grid 7 each time to clean the cutting deck because much less residual cut grass remains in the cutting deck. Furthermore, said residual cut grass is evacuated from the cutting deck through the several openings due to the light geometric shape of the cutting blade 1 and of the protection grid 7. In particular, most of the residual cut grass is evacuated through the opening 800 of the inner ring of the protection grid 7, which is obstruction- free. Synergistically, the fact that the central portion 2 of the cutting blade 1 is raised with respect to the horizontal geometric cutting plane C allows to have a greater free space volume between the cutting blade 1 and the obstruction-free through opening 800, thus allowing an even better dumping of the residual cut grass outside the cutting deck. Said further free space volume between the central portion 2 and the cutting blade and the through opening 800 of the protection grid 7 further synergistically allows a greater ventilation of the cutting deck and a greater grass cutting efficiency.

Alternatively, it is possible to provide only one cutting portion 4, i.e. one front cutting portion 41 of said at least one cutting portion 4 of the end portion 32 of said radial blade 3 which is arranged on the front of the end portion 32 in the rotation direction R.

Alternatively, other shapes of the central portion 30 of the radial blade 3 are provided. Said central portion 30 of the radial blade 3 may have a geometric section included for example in this list: a right-angle geometric section, the shape of a line hanging downwards, a concave or convex curvilinear shape.

Alternatively, the radial blade 3 may be rectilinear, following for example a radial radius of the disc of the central portion 2.

Alternatively, only the second end portion 32 of the radial blade 3 may be sickle-shaped and curvilinear, while the first portion 31 of the radial blade 3 may have any shape, e.g. rectilinear, following a radial radius of the disc of the central portion 2.

Again alternatively, each radial blade 3 may have curvilinear shape with said front portion 33 of convex shape and said rear portion of concave shape.

A further alternative is possible, in which only the second end portion 32 of the radial blade 3 may have any shape, may have a tip 321 facing the rotation direction R.

Different shapes of protection grids 7 are possible, where said at least a first portion 91 of connecting means 9 of said protection grid 7 is a multiplicity of sectors 91 which extend from the support boundary element 76 and hang downwards to said third horizontal geometric plane T. Said at least a second portion 92 of connecting means 9 of said protection grid 7 is a multiplicity of grid elements 921, which are mutually parallel and lie on said third horizontal geometric plane T. Said multiplicity of grid elements 921 is connected on a side to at least some sectors 91 of said multiplicity of sectors 91 and on the other side to said inner ring 8.

Alternatively, a yet alternative protection grid 7 can be provided, where at least a first portion 91 of connecting means 9 of said protection grid 7 is a multiplicity of sectors 91 which extend from the support boundary element 76 and hang downwards to said third horizontal geometric plane T. Said at least a second portion 92 of connecting means 9 of said protection grid 7 is a multiplicity of radial elements 922, which lie on said third horizontal geometric plane T. Said multiplicity of radial elements 922 is connected on a side to at least some sectors 91 of said multiplicity of sectors 91 and on the other side to said inner ring 8.

Advantageously, the cutting blade 1 according to the present invention eliminates frictions, thus increasing the cutting efficiency, limiting the presence of cut grass inside the cutting deck, reducing the energy consumption to rotate the cutting blade 1, decreasing the accumulation of cut grass in the cutting deck, and increasing the safety and robustness of the cutting blade.

Advantageously, the protection grid ensures a greater safety of the lawnmower, a greater cutting efficiency, a much smaller accumulation of cut grass in the cutting deck, thus making the operation of dumping said cut grass outside the cutting deck easy and safe without needing to remove the protection grid each time, thus making the lawnmower more solid, more robust and safer.

Advantageously, the lawnmower with a safety cutting deck comprises a cutting deck and a safety apparatus mounted with the cutting deck which comprises a cutting blade 1, which comprises a flat solid disc-shaped central portion 2 on a horizontal geometric plane H and a multiplicity of radial blades 3 on a lower horizontal geometric cutting plane C and a protection grid 7, which is fixedly mounted with the cutting deck and covers the entire action range of said cutting blade 1, comprising a multiplicity of connecting means 9 between a support boundary element 76 and an inner ring 8 with an obstruction-free through opening 800, synergically increases the safety for a user who uses the lawnmower, increases the cutting efficiency, reduces the energy consumption, allows to obtain a much smaller accumulation of cut grass in the cutting deck, thus making the cleaning operations simpler and safer, the lawnmower being more robust and safer.

## Claims

1. A cutting blade (1) of a lawnmower adapted to be keyed to a vertical motor axis (M) of the lawnmower, wherein said vertical motor axis (M) identifies a rotation direction (R) of said cutting blade (1) with respect to a cutting deck of the lawnmower, said cutting blade (1) comprises a flat solid disc-shaped central portion (2) which lies on a first horizontal geometric plane (H), said first horizontal geometric plane (H) is perpendicular to said vertical motor axis (M), said cutting blade (1) comprises a multiplicity of radial blades (3) which extend horizontally in radial directions with respect to said central portion (2), each radial blade (3) of said multiplicity of radial blades (3) comprises a first portion (31) which is flat and lies on said first horizontal geometric plane (H) and a second end portion (32) comprising at least one cutting portion (4), said second end portion (32) is flat and lies on a lower horizontal geometric cutting plane (C), wherein said horizontal geometric cutting plane (C) is parallel to said first horizontal geometric plane (H), said horizontal geometric cutting plane (C) is arranged at a vertical distance (D) with respect to said first horizontal geometric plane (H), said vertical distance (D) is measured along a vertical axis parallel to the vertical motor axis (M), in a grass cutting position said horizontal geometric cutting plane (C) is at a smaller distance from the ground with respect to the first horizontal geometric plane (H),
**characterized in that** it further comprises at least one reinforcing ring (5), said reinforcing ring (5) is concentric with said central portion (2) of said cutting blade (1), said reinforcing ring (5) is mounted with each radial blade (3) of said multiplicity of radial blades (3).

2. A cutting blade (1) according to claim 1, **characterized in that** each radial blade (3) comprises a central portion (30) which connects the first portion (31) to the second end portion (32), said central portion (30) of the radial blade (3) has a flex-shaped geometric section, said geometric section lies on a vertical geometric plane (V) identified by a geometric radius of the central portion (2) of the cutting blade (1) and by a vertical axis parallel to the vertical motor axis (M).

3. A cutting blade (1) according to claim 1, **characterized in that** at least a first reinforcing ring (51) of said at least one reinforcing ring (5) is mounted with each first portion (31) of said radial blade (3) of said multiplicity of radial blades (3) and at least a second reinforcing ring (52, 53) of said at least one reinforcing ring (5) is mounted with each second end portion (32) of said radial blade (3) of said multiplicity of radial blades (3).

4. A cutting blade (1) according to any one of the claims 1-3, **characterized in that** a front cutting portion (41) of said at least one cutting portion (4) of the second end portion (32) of said radial blade (3) is arranged on the front of the end portion (32) in rotation direction (R) and a rear cutting portion (42) of said at least one cutting portion (4) of the second end portion (32) of said radial blade (3) is arranged on the rear of the end portion (32) in opposite direction to the rotation direction (R).

5. A cutting blade (1) according to any one of the claims 1-4, **characterized in that** each radial blade (3) comprises a front portion (33) facing the rotation direction (R) and a rear portion (34) oppositely facing the rotation direction (R), each radial blade (3) is curvilinear in shape so that, in a plan view, said front portion (33) is concave in shape and said rear portion (34) is convex in shape.

6. A cutting blade (1) according to any one of the claims 1-5, **characterized in that** the second end portion (32) of said radial blade (3) is sickle-shaped in a top plan view, said second end portion (32) comprises a front portion (323) facing the rotation direction (R) and a rear portion (324) oppositely facing the rotation direction (R), said front portion (323) of said second end portion (32) is concave in shape and said rear portion (324) of said second end portion (32) is convex in shape when seen in a top plan view.

7. A cutting blade (1) according to claim 6, **characterized in that** said second end portion (32) has a tip (321) facing the rotation direction (R).

8. A cutting blade (1) according to any one of the claims 1-7, **characterized in that** said central portion (2) comprises a multiplicity of portions with concave profile (20) intercalated with said multiplicity of radial blades (3), so that each concave profile (20) of said central portion (2) is arranged between a radial blade (3) and a successive radial blade (3) of said multiplicity of radial blades (3), wherein said concave profile (20) reduces the diameter of the disc of the central portion (2).

9. A lawnmower comprising a cutting deck and a safety apparatus mounted with the cutting deck, **characterized in that** said safety apparatus comprises a cutting blade (1) according to any one of the claims 1-8.

## Patentansprüche

1. Schneidmesser (1) eines Rasenmähers, das dazu ausgebildet ist, auf einer vertikalen Motorachse (M) des Rasenmähers festgelegt zu werden, wobei die vertikale Motorachse (M) eine Drehrichtung (R) des Schneidmessers (1) in Bezug auf ein Mähwerk des Rasenmähers definiert, wobei das Schneidmesser (1) einen flachen, massiven, scheibenförmigen zentralen Bereich (2) aufweist, der auf einer ersten horizontalen geometrischen Ebene (H) liegt, wobei die erste horizontale geometrische Ebene (H) rechtwinklig zu der vertikalen Motorachse (M) ist, wobei das Schneidmesser (1) eine Vielzahl von Radialblättern (3) aufweist, die sich horizontal in radialer Richtung in Bezug auf den zentralen Bereich (2) erstrecken, wobei jedes Radialblatt (3) der Vielzahl von Radialblättern (3) einen ersten Bereich (31) aufweist, der eben ist und auf der ersten horizontalen geometrischen Ebene (H) liegt, und einen zweiten Endbereich (32) aufweist, der mindestens einen Schneidbereich (4) besitzt, wobei der zweite Endbereich (32) eben ist und auf einer tieferen horizontalen geometrischen Schneidebene (C) liegt, wobei die horizontale geometrische Schneidebene (C) zu der ersten horizontalen geometrischen Ebene (H) parallel ist, wobei die horizontale geometrische Schneidebene (C) in einem vertikalen Abstand (D) in Bezug auf die erste horizontale geometrische Ebene (H) angeordnet ist, wobei der vertikale Abstand (D) entlang einer vertikalen Achse parallel zu der vertikalen Motorachse (M) gemessen wird, wobei in einer Grasschneideposition die horizontale geometrische Schneidebene (C) in Bezug auf die erste horizontale geometrische Ebene (H) in einem geringeren Abstand vom Boden angeordnet ist,
**dadurch gekennzeichnet, dass** es ferner mindestens einen Verstärkungsring (5) aufweist, wobei der Verstärkungsring (5) konzentrisch zu dem zentralen Bereich (2) des Schneidmessers (1) ist, wobei der Verstärkungsring (5) an jedem Radialblatt (3) der Vielzahl von Radialblättern (3) angebracht ist.

2. Schneidmesser (1) nach Anspruch 1,
**dadurch gekennzeichnet, dass** jedes Radialblatt (3) einen zentralen Bereich (30) aufweist, der den ersten Bereich (31) mit dem zweiten Endbereich (32) verbindet, wobei der zentrale Bereich (30) des Radialblatts (3) einen geometrischen Abschnitt mit flexibler Form aufweist, wobei der geometrische Abschnitt auf einer vertikalen geometrischen Ebene (V) liegt, die durch einen geometrischen Radius des zentralen Bereichs (2) des Schneidmessers (1) und durch eine vertikale Achse parallel zu der vertikalen Motorachse (M) definiert ist.

3. Schneidmesser (1) nach Anspruch 1,
**dadurch gekennzeichnet, dass** mindestens ein erster Verstärkungsring (51) des mindestens einen Verstärkungsrings (5) an jedem ersten Bereich (31) des Radialblatts (3) der Vielzahl von Radialblättern (3) angebracht ist und mindestens ein zweiter Verstärkungsring (52, 53) des mindestens einen Verstärkungsrings (5) an jedem zweiten Endbereich (32) des Radialblatts (3) der Vielzahl von Radialblättern (3) angebracht ist.

4. Schneidmesser (1) nach einem der Ansprüche 1 bis 3,
**dadurch gekennzeichnet, dass** ein vorderer Schneidbereich (41) des mindestens einen Schneidbereichs (4) des zweiten Endbereichs (32) des Radialblatts (3) an der Vorderseite des Endbereichs (32) in Drehrichtung (R) angeordnet ist und ein hinterer Schneidbereich (42) des mindestens einen Schneidbereichs (4) des zweiten Endbereichs (32) des Radialblatts (3) auf der Rückseite des Endbereichs (32) in entgegengesetzter Richtung zu der Drehrichtung (R) angeordnet ist.

5. Schneidmesser (1) nach einem der Ansprüche 1 bis 4,
**dadurch gekennzeichnet, dass** jedes Radialblatt (3) einen vorderen Bereich (33), der in die Drehrichtung (R) weist, und einen hinteren Bereich (34), der der Drehrichtung (R) entgegengesetzt ist, aufweist, wobei jedes Radialblatt (3) derart kurvenförmig ausgebildet ist, dass in der Draufsicht der vordere Bereich (33) eine konkave Form aufweist und der hintere Bereich (34) eine konvexe Form aufweist.

6. Schneidmesser (1) nach einem der Ansprüche 1 bis 5,
**dadurch gekennzeichnet, dass** der zweite Endbereich (32) des Radialblatts (3) in einer Draufsicht von oben sichelförmig ist, wobei der zweite Endbereich (32) einen in die Drehrichtung (R) weisenden vorderen Bereich (323) und einen zu der Drehrichtung (R) entgegengesetzten hinteren Bereich (324) aufweist, wobei bei Betrachtung in einer Draufsicht von oben der vordere Bereich (323) des zweiten Endbereichs (32) eine konkave Form aufweist und der hintere Bereich (324) des zweiten Endbereichs (32) eine konvexe Form aufweist.

7. Schneidmesser (1) nach Anspruch 6,
**dadurch gekennzeichnet, dass** der zweite Endbereich (32) eine Spitze (321) aufweist, die in die Drehrichtung (R) weist.

8. Schneidmesser (1) nach einem der Ansprüche 1 bis 7,
**dadurch gekennzeichnet, dass** der zentrale Bereich (2) eine Vielzahl von Bereichen mit einem konkaven Profil (20) abwechselnd mit der Vielzahl von Radialblättern (3) aufweist, so dass jedes konkave Profil (20) des zentralen Bereichs (2) zwischen einem Radialblatt (3) und einem nachfolgenden Radialblatt (3) der Vielzahl von Radialblättern (3) angeordnet ist, wobei das konkave Profil (20) den Durchmesser der Scheibe des zentralen Bereichs (2) verringert.

9. Rasenmäher mit einem Mähwerk und einer an dem Mähwerk angebrachten Sicherheitsvorrichtung,
**dadurch gekennzeichnet, dass** die Sicherheitsvorrichtung ein Schneidmesser (1) nach einem der Ansprüche 1 bis 8 aufweist.

## Revendications

1. Lame de coupe (1) d'une tondeuse à gazon adaptée pour être clavetée par rapport à un axe de moteur vertical (M) de la tondeuse à gazon, dans laquelle ledit axe de moteur vertical (M) identifie une direction de rotation (R) de ladite lame de coupe (1) par rapport à un plateau de coupe de la tondeuse à gazon, ladite lame de coupe (1) comprend une portion centrale en forme de disque solide plane (2) qui repose sur un premier plan géométrique horizontal (H), ledit premier plan géométrique horizontal (H) est perpendiculaire audit axe de moteur vertical (M), ladite lame de coupe (1) comprend une multiplicité de lames radiales (3) qui s'étendent horizontalement dans des directions radiales par rapport à ladite portion centrale (2), chaque lame radiale (3) de ladite multiplicité de lames radiales (3) comprend une première portion (31) qui est plane et repose sur ledit premier plan géométrique horizontal (H) et une seconde portion d'extrémité (32) comprenant au moins une portion de coupe (4), ladite seconde portion d'extrémité (32) est plane et repose sur un plan de coupe géométrique horizontal inférieur (C), dans laquelle ledit plan de coupe géométrique horizontal (C) est parallèle audit premier plan géométrique horizontal (H), ledit plan de coupe géométrique horizontal (C) est disposé à une distance verticale (D) par rapport audit premier plan géométrique horizontal (H), ladite distance verticale (D) est mesurée le long d'un axe vertical parallèle à l'axe de moteur vertical (M), dans une position de coupe de gazon ledit plan de coupe géométrique horizontal (C) se trouve à une distance moindre du sol que le premier plan géométrique horizontal (H),
**caractérisée en ce qu'**elle comprend de plus au moins un anneau de renforcement (5), ledit anneau de renforcement (5) est concentrique à ladite portion centrale (2) de ladite lame de coupe (1), ledit anneau de renforcement (5) est monté avec chaque lame radiale (3) de ladite multiplicité de lames radiales (3).

2. Lame de coupe (1) selon la revendication 1, **caractérisée en ce que** chaque lame radiale (3) comprend une portion centrale (30) qui connecte la première portion (31) à la seconde portion d'extrémité (32), ladite portion centrale (30) de la lame radiale (3) présente une section géométrique en forme d'inflexion, ladite section géométrique repose sur un plan géométrique vertical (V) identifié par un rayon géométrique de la portion centrale (2) de la lame de coupe (1) et par un axe vertical parallèle à l'axe de moteur vertical (M).

3. Lame de coupe (1) selon la revendication 1, **caractérisée en ce qu'**au moins un premier anneau de renforcement (51) dudit au moins un anneau de renforcement (5) est monté avec chaque première portion (31) de ladite lame radiale (3) de ladite multiplicité de lames radiales (3) et au moins un second anneau de renforcement (52, 53) dudit au moins un anneau de renforcement (5) est monté avec chaque seconde portion d'extrémité (32) de ladite lame radiale (3) de ladite multiplicité de lames radiales (3).

4. Lame de coupe (1) selon l'une quelconque des revendications 1-3, **caractérisée en ce qu'**une portion de coupe avant (41) de ladite au moins une portion de coupe (4) de la seconde portion d'extrémité (32) de ladite lame radiale (3) est disposée sur l'avant de la portion d'extrémité (32) dans une direction de rotation (R) et une portion de coupe arrière (42) de ladite au moins une portion de coupe (4) de la seconde portion d'extrémité (32) de ladite lame radiale (3) est disposée sur l'arrière de la portion d'extrémité (32) dans une direction opposée à la direction de rotation (R).

5. Lame de coupe (1) selon l'une quelconque des revendications 1-4, **caractérisée en ce que** chaque lame radiale (3) comprend une portion avant (33) faisant face à la direction de rotation (R) et une portion arrière (34) faisant face inversement à la direction de rotation (R), chaque lame radiale (3) est de forme curvilinéaire de sorte que, dans une vue de plan, ladite portion avant (33) est de forme concave et ladite portion arrière (34) est de forme convexe.

6. Lame de coupe (1) selon l'une quelconque des revendications 1-5, **caractérisée en ce que** la seconde portion d'extrémité (32) de ladite lame radiale (3) est en forme de faucille dans une vue de plan supérieure, ladite seconde portion d'extrémité (32) comprend une portion avant (323) faisant face à la direction de rotation (R) et une portion arrière (324) faisant face inversement à la direction de rotation (R), ladite portion avant (323) de ladite seconde portion d'extrémité (32) est de forme concave et ladite portion arrière (324) de ladite seconde portion d'extrémité (32) est de forme convexe lorsqu'elle est vue dans une vue de plan supérieure.

7. Lame de coupe (1) selon la revendication 6, **caractérisée en ce que** ladite seconde portion d'extrémité (32) présente une pointe (321) faisant face à la direction de rotation (R).

8. Lame de coupe (1) selon l'une quelconque des revendications 1-7, **caractérisée en ce que** ladite portion centrale (2) comprend une multiplicité de portions avec un profil concave (20) intercalée avec ladite multiplicité de lames radiales (3), de sorte que chaque profil concave (20) de ladite portion centrale (2) est disposé entre une lame radiale (3) et une lame radiale suivante (3) de ladite multiplicité de lames radiales (3), dans laquelle ledit profil concave (20) réduit le diamètre du disque de la portion centrale (2).

9. Tondeuse à gazon comprenant un plateau de coupe et un appareil de sécurité monté avec le plateau de coupe, **caractérisée en ce que** ledit appareil de sécurité comprend une lame de coupe (1) selon l'une quelconque des revendications 1-8.
